Europäisches Patentamt

European Patent Office

Office européen des brevets

(11) Publication number: 0 242 999

A2

# EUROPEAN PATENT APPLICATION

(21) Application number: 87302492.1

(22) Date of filing: 23.03.87

(51) Int. Cl.4: **B23K 35/30** , E21B 10/56

(30) Priority: 17.04.86 GB 8609352

(43) Date of publication of application:
28.10.87 Bulletin 87/44

(84) Designated Contracting States:
BE CH DE FR LI NL SE

(71) Applicant: NL PETROLEUM PRODUCTS
LIMITED
Oldends lane Industrial Estate
Stonehouse Gloucestershire(GB)

(72) Inventor: Griffin, Nigel Dennis
15 Paynes Meadow
Whitminster Gloucestershire(GB)

(74) Representative: Carter, Gerald et al
Arthur R. Davies & Co. 27 Imperial Square
Cheltenham GL50 1RQ Gloucestershire(GB)

(54) Improvements in or relating to cutting structures for rotary drill bits.

(57) In a method of forming a cutting structure 14, for a rotary drill bit, of the kind comprising a preform cutting element 18 having a front cutting face formed of superhard material and a rear face bonded to a carrier 19 of less hard material, the cutting element is bonded to the carrier by means of an alloy containing phosphorus in such proportions that the liquidus temperature of the alloy is below 1050°C. The base material of the alloy may be nickel, cobalt, copper or manganese, and the alloy preferably contains from 9% to 13% by weight of phosphorus.

FIG.3b

EP 0 242 999 A2

## "Improvements in or relating to cutting structures for rotary drill bits"

The invention relates to cutting structures for rotary drill bits for use in drilling or coring deep holes in subsurface formations.

In particular, the invention is applicable to cutting structures for rotary drill bits of the kind comprising a bit body having a shank for connection to the drill string and an inner passage for supplying drilling fluid to the face of the bit, the bit body carrying a plurality of cutting structures. Each cutting structure comprises a preform cutting element, often in the form of a circular disc, having a front cutting face formed of polycrystalline diamond or other superhard material and a rear face bonded to a carrier of less hard material, such as cemented tungsten carbide, the carrier being in turn mounted on the bit body.

Usually each preform cutting element comprises two layers: a hard facing layer formed of the polycrystalline diamond or other superhard material, and a backing layer formed of less hard material, usually cemented tungsten carbide, the two layers being bonded together during formation of the cutting element in a high pressure, high temperature forming press.

In one common form of drill bit of the above mentioned type, the carrier comprises a stud or post to which the preform is bonded, the stud or post being received and secured within a socket in the bit body.

In one common method of making such a bit body, the body, or the outer portion thereof, is formed from an infiltrated tungsten carbide matrix by a powder metallurgy process. In this process a hollow mould is first formed, for example from graphite, in the configuration of the bit body or a part thereof. The mould is packed with powdered material, such as tungsten carbide, which is then infiltrated with a metal binder alloy, such as a copper alloy, in a furnace so as to form a hard matrix. Formers, for example of graphite, are normally mounted on the interior surface of the mould so as to define in the finished bit body the aforementioned sockets to receive the studs of the cutting structures. In matrix-bodied bits the studs are usually brazed into their sockets.

In another common form of drill bit, the bit body is machined from steel and the sockets are machined in the bit body. In this case the studs of the cutting structures are often shrink-fitted into the sockets, but other methods of securing them, such as brazing, may also be used.

Conventional two-layer preforms of the kind referred to above are only thermally stable up to a temperature of about 700° to 750°C. Due to this limitation, problems have arisen in bonding the preforms sufficiently securely to the stud or post. The preforms are normally bonded to the stud or post by brazing and, generally speaking, the strength of a brazed joint depends on the liquidus temperature of the braze alloy - the higher the liquidus temperature the greater the strength. Accordingly, if the brazing is carried out at a temperature which the preform can withstand the resultant brazed joint may not be sufficiently strong to resist the substantially mechanical forces to which it is subjected during drilling. The problem may also be worsened due to the bond suffering from a significant loss of strength when it is re-heated for brazing the post or stud into the drill bit body. The joint may also fail as a result of high temperatures reached during drilling.

In order to enable higher temperature brazing processes to be employed, sophisticated cooling techniques have been developed to protect the two-layer preform from the high temperature at which brazing takes place. Such techniques are described for example in U.S. Patent Nos. 4,225,322, 4,319,707 and 4,527,998.

The last-mentioned patents refer to various high temperature braze alloys which may be used with the bonding methods described. A commonly used alloy is a copper-based brazing alloy sold under the trade name "COCUMAN". Such known brazing alloys, however, suffer from the disadvantages mentioned above and in particular the loss of strength when re-heated for brazing the cutting structure into the drill bit body. The present invention sets out to provide an improved method of manufacturing cutting structures using an improved bonding alloy.

According to the invention there is provided a method of forming a cutting structure, for a rotary drill bit, of the kind comprising a preform cutting element having a front cutting face formed of superhard material and a rear face bonded to a carrier of less hard material, the method comprising bonding the cutting element to the carrier by means of an alloy containing phosphorus in such proportions that the liquidus temperature of the alloy is below 1050°C. The base material of the alloy may be selected from nickel, cobalt, copper or manganese. Preferably the alloy contains up to 20% by weight of phosphorus.

It is found that a bonding alloy according to the invention may result in a bond of higher strength (around $75 \times 10^3$ psi) as compared to the bond strength of alloys normally used ($50 \times 10^3$ psi). In addition it is found that the bond is not subject to significant thermal degradation on subsequent brazing of the carrier into a socket on the drill bit body. Surprisingly, in spite of these advantages of greater strength and lower susceptibility to thermal degradation, the alloy according to the invention is found to bond at a lower temperature than the brazing alloys normally used. Thus, although it may still be advisable to use the cooling techniques referred to in the above mentioned patents, the necessity for adequate cooling is less critical and there is less risk of thermal damage to the superhard material of the cutting face during bonding.

Although the alloy may contain phosphorus in amounts from 1 to 20%, preferably the alloy contains from 9% to 13% by weight of phosphorus. The alloy may also contain up to 10% by weight of copper.

The bond alloy may be provided in the form of a shim or powder in conventional manner when carrying out the bonding. Alternatively, the bond alloy may be provided in the form of an electroless nickel plated deposit formed on the rear face of the cutting element and/or the opposed face of the carrier prior to bonding.

Other details of the bonding method may be in accordance with the methods described in the above-mentioned U.S. patents where the cutting element is disposed in thermal contact with a heat sink during the bonding process, and the disclosures of the above mentioned patents are therefore incorporated herein by reference.

The invention includes within its scope a cutting structure when formed by any of the methods referred to above.

The following is a more detailed description of embodiments of the invention, reference being made to the accompanying drawings in which:

Figure 1 is a side elevation of a typical drill bit in which cutting structures according to the invention may be used,

Figure 2 is an end elevation of the drill bit shown in Figure 1, and

Figures 3, 4, 5 and 6 show front and side elevations of various forms of cutting structure in accordance with the invention.

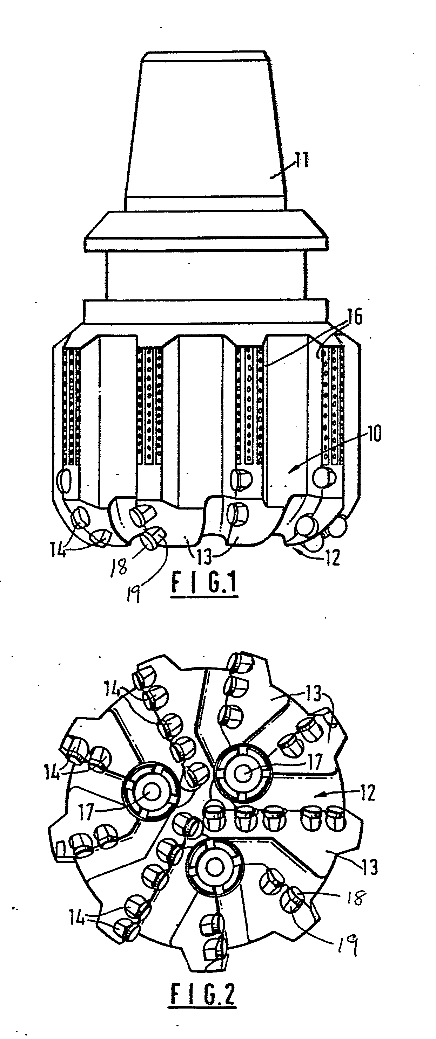

Figures 1 and 2 show a typical full bore drill bit of a kind to which cutting structures of the present invention are applicable.

The bit body 10 is formed from infiltrated tungsten carbide matrix by the method previously referred to, and has a threaded shank 11 at one end for connection to the drill string.

The operative end face 12 of the bit body is formed with a number of blades 13 radiating from the central area of the bit, and the blades carry cutting structures 14 spaced apart along the length thereof.

The bit has a gauge section including kickers 16 which contact the walls of the bore hole to stabilise the bit in the bore hole. A central passage (not shown) in the bit body and shank delivers drilling fluid through nozzles 17 in the end face 12 in known manner.

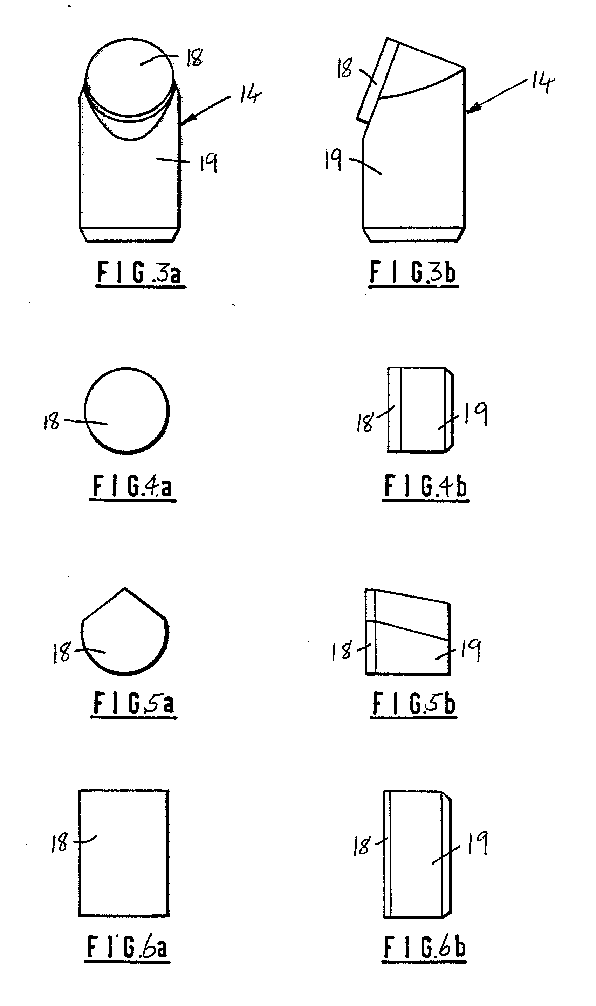

As shown in Figures 3a and 3b as well as in Figures 1 and 2, each cutting structure 14 comprises a preform cutting element 18 mounted on a carrier in the form of a stud 19 which is located in a socket in the bit body. The sockets are formed in the bit body by formers mounted within the mould within which the bit body is formed.

Each preform cutting element 18 is usually in the form of a circular tablet comprising a thin facing layer of polycrystalline diamond bonded to a backing layer of cemented tungsten carbide, both layers being of uniform thickness.

Normally, in a bit of this type, before the cutting structure is mounted in the bit body, the rear surface of the backing layer of each preform cutting element is brazed to the opposed surface of the stud by a process known as LS bonding, using for example the methods and alloys described in the above mentioned U.S. Patent No. 4,527,998. During the brazing operation the cutting element is in thermal contact with a heat sink so as to minimise thermal damage to the diamond layer during the brazing process.

In the method according to the present invention the normal steps of such bonding method may be followed and will not therefore be described in detail. However, in accordance with one preferred embodiment of the invention, the bonding alloy used is a nickel-based alloy containing up to 20% by weight of phosphorus, and is preferably of near-eutectic composition containing phosphorus in the range of 9% to 13%.

After formation of the cutting structures the studs are secured in the preformed sockets in the bit body. Although other methods of securing the studs in the sockets may be used, it is common for the studs to be brazed into the sockets. During such fitting operations the necessary elevated brazing temperature has been found to cause thermal degradation of the bond between the cutting element and the stud when using normal brazing alloys. It is found, however, that such thermal degradation is reduced or eliminated when using a bonding alloy containing phosphorus in accordance with the invention.

It will be appreciated that the above is only one example of the many variations of the type of bit or cutting structure to which the invention is applicable. For example, the invention may also be applicable to cutting structures for use in steel-bodied bits of the kind previously referred to.

Figures 4 to 6 show, by way of example, other forms of cutting structure comprising a preform cutting element 18 bonded, using an alloy in accordance with the invention, to a carrier 19 which is then subsequently mounted on the bit body.

## Claims

1. A method of forming a cutting structure (14), for a rotary drill bit (10), of the kind comprising a preform cutting element (18) having a front cutting face formed of superhard material and a rear face bonded to a carrier (19) of less hard material, the method comprising bonding the cutting element (18) to the carrier (19) by means of an alloy containing phosphorus in such proportions that the liquidus temperature of the alloy is below 1050°C.

2. A method according to Claim 1, characterised in that the base material of the alloy is selected from nickel, cobalt, copper or manganese.

3. A method according to Claim 1 or Claim 2, characterised in that the alloy contains up to 20% by weight of phosphorus.

4. A method according to Claim 3, characterised in that the alloy contains from 9% to 13% by weight of phosphorus.

5. A method according to any of Claims 1 to 4, characterised in that the alloy contains up to 10% by weight of copper, in addition to the base metal.

6. A method according to any of Claims 1 to 5, characterised in that the bond alloy is provided in the form of a shim or powder when carrying out the bonding.

7. A method according to any of Claims 1 to 5, characterised in that the bond alloy is provided in the form of an electroless nickel plated deposit formed on the rear face of the cutting element (18) and/or the opposed face of the carrier (19) prior to bonding.

8. A cutting structure, for a rotary drill bit, when formed by the method according to any of Claims 1 to 7.

9. A rotary drill bit comprising a bit body (10) having a shank (11) for connection to the drill string and an inner passage for supplying drilling fluid to the face (12) of the bit, the bit body carrying a plurality of cutting structures (14) formed by the method according to any of Claims 1 to 7.

F I G.1

F I G.2

F I G.3a

F I G.3b

F I G.4a

F I G.4b

F I G.5a

F I G.5b

F I G.6a

F I G.6b